Europäisches Patentamt

European Patent Office

Office européen des brevets

(19)

(11) Veröffentlichungsnummer : **0 116 356**
**B1**

(12) **EUROPÄISCHE PATENTSCHRIFT**

(45) Veröffentlichungstag der Patentschrift :
06.05.87

(21) Anmeldenummer : 84101152.1

(22) Anmeldetag : 04.02.84

(51) Int. Cl.⁴ : **F 01 C   1/36**, F 01 C 11/00,
F 04 C 11/00, F 02 B 25/08,
F 04 C 23/00, F 01 L   7/06

(54) **Rotationskolbenmaschine.**

(30) Priorität : 15.02.83 CH 840/83

(43) Veröffentlichungstag der Anmeldung :
22.08.84 Patentblatt 84/34

(45) Bekanntmachung des Hinweises auf die Patenterteilung : 06.05.87 Patentblatt 87/19

(84) Benannte Vertragsstaaten :
AT BE CH DE FR GB IT LI LU NL SE

(56) Entgegenhaltungen :
EP-A- 0 023 529
DE-A- 2 413 771
GB-A-   596 064
GB-A-   788 492
GB-A- 2 088 957
US-A- 3 289 542

(73) Patentinhaber : **Zimmermann, Otto, Dr.**
**Lehenweg 4**
**A-6971 Hard/Vlbg. (AT)**

(72) Erfinder : **Zimmermann, Otto, Dr.**
**Lehenweg 4**
**A-6971 Hard/Vlbg. (AT)**

(74) Vertreter : **Riebling, Günter, Dr. et al**
**Patentanwälte Dr.-Ing., Dipl.-Ing., Ing.(grad) Günter**
**Riebling Dr.-Ing., Dipl.-Ing. Peter Riebling Rennerle 10**
**Postfach 3160**
**D-8990 Lindau (Bodensee) (DE)**

## Beschreibung

Die Erfindung betrifft eine Rotationskolbenmaschine nach dem Oberbegriff des Patentanspruchs 1.

Eine eingangs genannte Rotationskolbenmaschine ist beispielsweise mit dem Gegenstand der EP-A-0 023 529 bekannt geworden. Bei dieser bekannten Rotationskolbenmaschine ist einer Hauptstufe eine sogenannte Abgas- oder Auspuffstufe nachgeschaltet. Das Arbeitsmedium wird von einem von der Welle des Absperrläufers rotierend angetriebenen Drehschieber in den jeweiligen Arbeitsraum ein- und ausgeleitet. In dieser Druckschrift ist nur angegeben, wie in Synchronisation zu der Drehung des Absperrläufers im Drehschieber Einlaß- und Auslaß-Schlitze geöffnet und geschlossen werden. Wie jedoch das Arbeitsmedium in den Arbeitsraum ein- und ausgeleitet wird, ist dort nicht angegeben.

Die Kopplung einer einzigen Hauptstufe mit einer nachgeschalteten Abgasstufe hat den Nachteil, daß bei Verwendung der genannten Rotationskolbenmaschine als Verbrennungsmotor eine relativ ungleichmässige Leistungsabgabe, bezogen auf den Drehwinkel des Kolbenläufers, gegeben ist. Außerdem ist die Leistungsabgabe relativ gering, weil nur eine Hauptstufe und eine Auspuffstufe verwendet werden.

In der Verwendung der genannten Rotationskolbenmaschine als Kolbenkompressor besteht der Nachteil, daß aufgrund der einstufigen Ausführung der Hauptstufe relativ hohe und plötzliche Druckwechsel im Arbeitsraum des Kolbens hingenommen werden müssen. Dies erfordert jedoch eine relativ starke DImensionierung der Maschinenteile, weil die Maschine entsprechend den höchsten Druckspitzen · dimensioniert werden muß. Hierdurch vibriert die Maschine (sowohl in der Ausbildung als Kompressor als auch in der Ausbildung als Verbrennungsmotor) sehr stark, und in der Ausbildung als Kompressor wird eine relativ große Antriebskraft benötigt.

Bei der GB-A-788 492 sind exzentrische Arbeitskammern vorhanden, wobei jeder Arbeitskammer zwei Kolben zugeordnet sind. Damit ist der Nachteil verbunden, daß sich Ein- und Auslaß der Arbeitskammer um etwa lediglich 150° gegenüberliegen, so daß jeder Kolben nur auf einem relativ kleinen Drehwinkel Arbeit leisten kann. Hieraus ergibt sich eine nur ungenügende Gleichförmigkeit des Antriebs-Drehmomentes.

Der Erfindung liegt die Aufgabe zugrunde, eine Rotationskolbenmaschine nach der EP-A-0 023 529 so weiterzubilden, daß bei geringeren Abdichtungsverlusten zwischen den einzelnen Stufen eine verbesserte Arbeits- bzw. Verdichtungsleistung erreicht werden kann.

Zur Lösung der gestellten Aufgabe ist die Erfindung durch die im Anspruch 1 wiedergegebene technische Lehre gekennzeichnet.

Vorteil der erfindungsgemässen Lehre ist, daß sowohl beim Motorteil als auch beim Kompressorteil ein langer, kontinuierlicher Drehwinkel den jeweiligen Kolben zugeordnet wird, wodurch sich eine hohe Gleichförmigkeit der Antriebs- bzw. Verdichtungsleistung bei geringen Abdichtungsverlusten ergibt.

Erfindungsgemäss wird beim Motor- und Kompressorteil jedem Kolben ein Drehwinkel von etwa 270° zwischen dem Einlaß und dem Auslaß zugeordnet, wodurch sich eine besonders hohe Laufruhe bei Erreichung eines hohen Drehmomentes für den Mehr-Kammer-Motor ergibt.

Eine derartige Laufruhe kann beispielsweise nicht mit einer Rotationskolben-Maschine nach der EP-A-0 023 529 erreicht werden, weil dort zwar auch ein Motor mit einem Kompressor gekoppelt ist, allerdings nicht auf der gleichen Welle.

Weiteres Merkmal der Erfindung ist, daß die einlaß-\und auslaßseitigen Steuerscheiben unmittelbar drehfest mit den Stirnseiten des Kolbenläufers verbunden sind. Hierdurch wird ein nur geringer Konstruktionsaufwand erfordert, denn es handelt sich um eine einfache Konstruktion, weil ein gesonderter Antrieb der Steuerscheiben entfällt ; die Reparaturanfälligkeit wird hierdurch sehr stark herabgesetzt und — weil nur zwei mechanisch bewegte Teile unabhängig pro Zylinder vorhanden sind, wird dadurch die Laufruhe stark verbessert.

Es bedarf keines externen Antriebes für einen Drehschieber mehr, so wie es bei der EP-A-0 023 529 gezeigt war. In der Ausbildung der erfindungsgemässen, Rotationskolbenmaschine als Rotationskolbenkompressor ergibt sich hierdurch bereits schon der Vorteil, daß wegen des fehlenden Nebenantriebs für die Steuerung des Arbeitsmediums eine geringere Antriebsenergie benötigt wird.

Es wird hierbei bevorzugt, daß der Kolbenkompressor mehrstufig ausgeführt wird und die einlaß- und auslaßseitig angeordneten Steuerscheiben Arbeitsräume begrenzen, deren Volumen von Stufe zu Stufe abnimmt.

Durch die mehrstufige Ausbildung des Kolbenkompressors wird der Vorteil erreicht, daß ein hoher Nutzdruck in der letzten Stufe entnommen werden kann. Das Grundprinzip des Kolbenkompressors nach der Erfindung beruht darauf, daß eine erste Verdichtungsstufe ihr Arbeitsvolumen in eine zweite Verdichtungsstufe mit geringerem Arbeitsraumvolumen einschiebt. Das Arbeitsmedium wird hierdurch komprimiert und im nächsten Umlauf schiebt die zweite Verdichtungsstufe das komprimierte Arbeitsmedium in eine dritte Verdichtungsstufe mit noch kleinerem Arbeitsraumvolumen ein. Hierdurch erfolgt wiederum eine Komprimierung des Arbeitsmediums, wobei beliebig viele Verdichtungsstufen hintereinandergeschaltet werden können. In einer bevorzugten Ausführungsform der vorliegenden Erfindung ist es vorgesehen, daß insgesamt sechs Verdichtungsstufen hintereinandergeschaltet sind.

Ein nicht gekannter Gleichförmigkeitsgrad hinsichtlich der Druckverhältnisse im Arbeitsmedium und eine damit verbundene große Laufruhe ergibt sich dadurch, daß in der Ausbildung der Rotationskolbenmaschine als mehrstufiger Kolbenkompressor die Öffnungen in den Steuerscheiben gegenüber den feststehenden Öffnungen in den Überströmkanälen so angeordnet sind, daß während eines Kompressionshubes die Verbindung von einem größeren.

Arbeitsraum zu einem sich daran anschließenden kleineren Arbeitsraum über eine Umdrehung von ca. 300 Grad ständig geöffnet ist. Diese technische Lehre ist Voraussetzung dafür, daß die erste Verdichtungsstufe ihr Arbeitsraumvolumen in die zweite Verdichtungsstufe einschieben kann und dort — bedingt durch das kleinere Volumen des Arbeitsraumes — die oben angesprochene Kompression des Arbeitsmediums erfolgt. Zur weiteren Verbesserung der Strömungsverhältnisse des Arbeitsmediums wird es nach dem Gegenstand des Anspruches 5 bevorzugt, wenn auf der Kompressionsseite des Kolbenläufers eine gegenüber dem Außenumfang radial zurückspringende Aussparung mit geringerem Abstand von der Drehachse des Kolbenläufers angeordnet ist, welche in ihrem Bereich den dichtenden Wälzeingriff mit dem Absperrläufer unterbricht und die so angeordnet ist, daß nach Schließung der Öffnung des Überströmkanals durch die Steuerscheibe eine Verbindung für das Arbeitsmedium zwischen der Kompressions- und der Ansaugseite des Kolbenläufers entsteht.

Hierdurch wird ein schädlicher Druckaufbau (Gegendruck) auf der Kompressionsseite des Kolbens verhindert und die für den Antrieb des Kolbenkompressors notwendige Antriebsenergie noch einmal herabgesetzt.

In der Ausbildung der Rotationskolbenmaschine als mehrstufiger Verbrennungsmotor ergibt sich der Vorteil, daß bei dem Parallelbetrieb mehrere Stufen, wobei mehrere, winkelversetzt auf einer gemeinsamen Welle rotierende, Kolbenläufer vorgesehen sind, ein hoher Gleichförmigkeitsgrad in der Drehmomentenabgabe erzielt wird. Ein solcher mehrstufiger Verbrennungsmotor hat nur zwei bewegt Teile, nämlich erstens den Kolbenläufer mit Kolben und Steuerscheiben verbunden mit der einen Welle, sowie zweitens der Absperrläufer, der mit der anderen Welle verbunden ist, und aufgrund der Winkelversetzung der gemeinsam auf einer Welle rotierenden Kolbenläufer erfolgt eine Überschneidung der Drehmomentenabgabe, wobei sich die einzelnen Drehmomentenkurven addieren, wodurch eine hohe Antriebskraft — verbunden mit einer großen Laufruhe — erzielt wird.

Die Elemente, die die Steuerung abwickeln, sind folgende :

1. Gehäusewand mit Einlaßöffnung
2. Einlaßsteuerscheibe, drehfest mit dem Kolbenläufer verbunden, den Arbeitsraum nach einer Seite begrenzend, und ihre Öffnungen,
3. Auslaßsteuerscheibe, drehfest mit dem Kolbenläufer verbunden, den Arbeitsraum nach einer weiteren Seite begrenzend,
4. Gehäusetrennwand mit Überströmkanal,
5. Einlaßsteuerscheibe, drehfest mit dem Kolbenläufer der nächsten Stufe verbunden,
6. Aussparung im Kolbenläufer, die in einer bestimmten Stellung die Absperrwirkung des Absperrteiles nutzbringend unterbricht.

Obige Elemente ermöglichen bei gleichförmiger Umdrehung eine Verschiebung der Gase in Arbeitsräume mit kleinerem Volumen durch Verminderung der Stirnflächen dieser Räume : es wird dadurch der Kraftspitzenbedarf auf zum. Beispiel ein Drittel gesenkt.

Im folgenden wird die Erfindung anhand von mehreren Ausführungswege darstellenden Zeichnungen näher erläutert.

Es zeigen :

Figur 1 Schnitt durch eine Rotationskolbenmaschine in ihrer Ausbildung als Kompressor,

Figur 2 Ansicht auf den Kompressor in Richtung des Pfeiles II in Figur 1,

Figur 2a eine gegenüber der Figur 2 abgewandelte Ausführung eines Kompressors,

Figur 3 Schnitt gemäss der Linie III-III in Figur 1,

Figur 4 Schnitt gemäss der Linie IV-IV in Figur 1 mit Draufsicht auf eine einlasseitige Steuerscheibe der zweiten Verdichtungsstufe,

Figur 5 Schnitt gemäss der Linie V-V in Figur 1 als Schnitt durch den Arbeitsraum der ersten Verdichtungsstufe,

Figur 5a Steuerdiagramm der ersten Verdichtungsstufe,

Figur 5b Steuerdiagramm der zweiten Verdichtungsstufe,

Figur 5c schematisiert gezeichnetes Ersatzbild zur Erläuterung des Funktionsprinzips des Kolbenkompressors nach den Figuren 1 bis 5b,

Figur 6 Längsschnitt durch die Rotationskolbenmaschine in ihrer Ausbildung als Verbrennungsmotor,

Figur 7 Schnitt gemäss der Linie VII-VII in Figur 6,

Figur 8 Schnitt gemäss der Linie VIII-VIII in Figur 6.

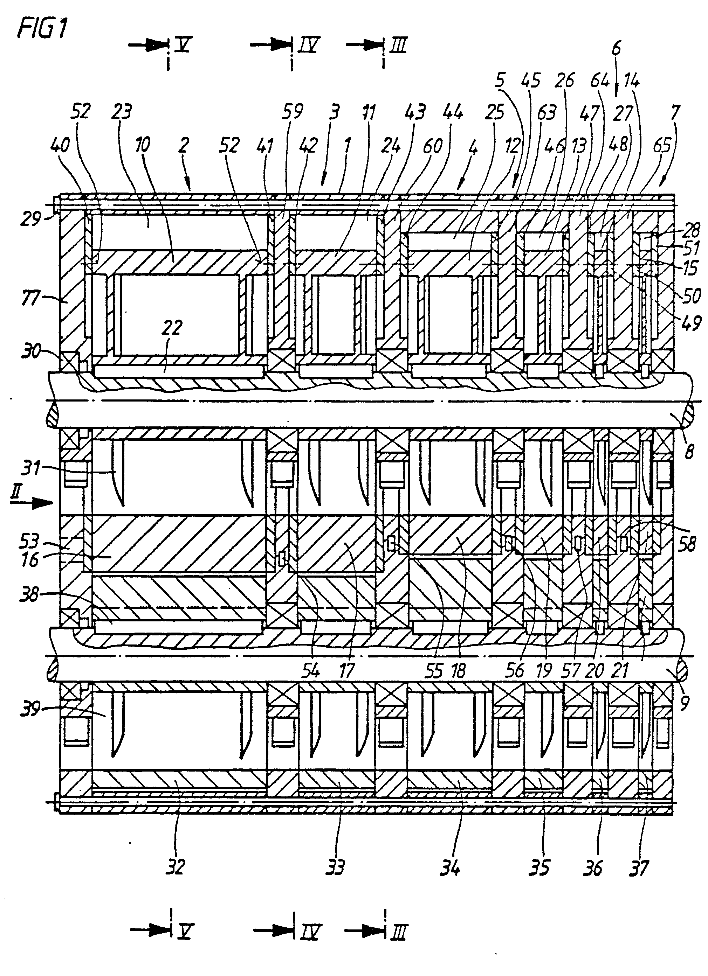

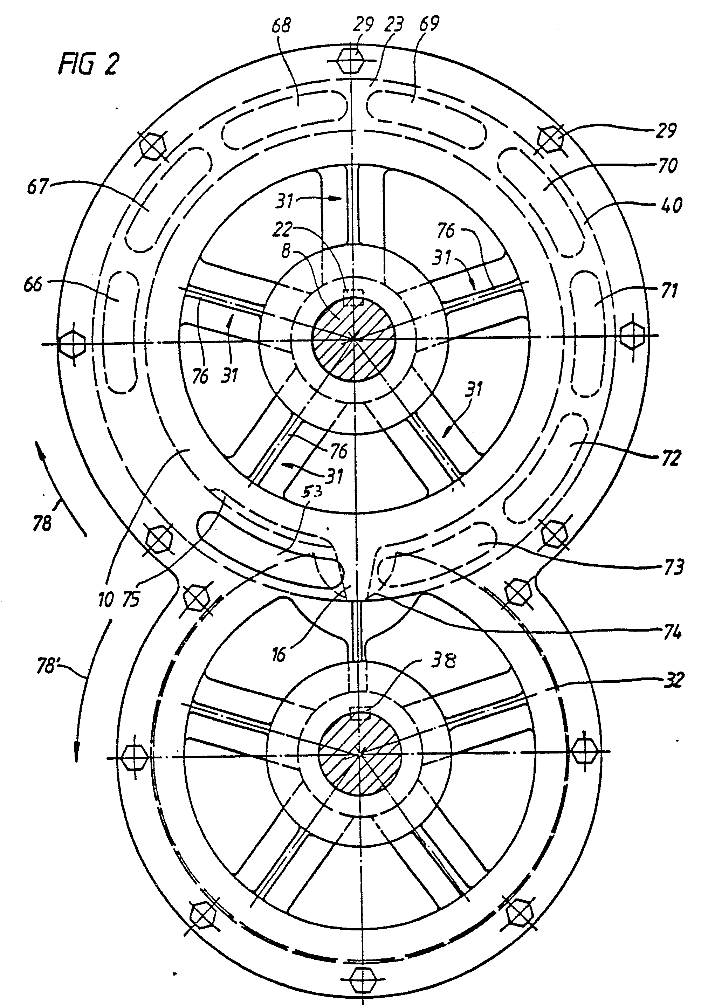

Gemäss Figur 1 sind in einem Maschinengehäuse 1 mithilfe von Schrauben 29 zusammengehalten, paketweise hintereinander angeordnet sechs Verdichtungsstufen 2 bis 7 vorgesehen. Jede Verdichtungsstufe weist einen Kolbenläufer 10 bis 15 auf, an jedem Kolbenläufer 10 bis 15 ist ein radial auswärts ragender Kolben 16 bis 21 angeordnet. Der Kolben 16-21 dichtet mit nicht näher dargestellten Dichtungsmitteln an der Wandung des zugeordneten Arbeitsraumes 23 bis 28 ab.

Jeder Kolbenläufer 10 ist drehfest über jeweils zugeordnete Nutensteine 22 mit einer Welle 8 verbunden. Die Welle 8 ist in entsprechenden Kugellagern 30 am Gehäuse drehbar gelagert. Innenseitig der Kolben 16-21 sind zugeordnete Ventilatorflügel zur Kühlung des Arbeitsraumes angeordnet. Am Beispiel der Verdichtungsstufe 2 wird ein solcher Ventilatorflügel mit 31 bezeichnet.

Ein Teil des Arbeitsraumes 23-28 wird von einem Absperrläufer 32-37 begrenzt, der jeweils drehfest über Nutensteine 38 auf einer zweiten Welle 9 befestigt ist. Jeder Absperrläufer 32 ist wiederum mit einem Ventilatorflügel 39 verbunden.

Die Welle 9 ist mit der Welle 8 synchron über nicht näher dargestellte Koppelzahnräder gekoppelt.

An jeder Stirnseite des Arbeitsraumes 23-28 ist jeweils eine Steuerscheibe angebracht. Die Verdichtungsstufe 2 weist hierbei eine Einlaß-Steuerscheibe 40 und eine Auslaß-Steuerscheibe 41 auf.

In analoger Weise weist die Verdichtungsstufe 3 Einlaß- und Auslaß-Steuerscheiben 42, 43 auf ; die Verdichtungsstufe 4 Einlaß- und Auslaß-Steuerscheiben 44, 45 ; die Verdichtungsstufe 5 Einlaß- und Auslaß-Steuerscheiben 46, 47 ; die Verdichtungsstufe 6 Einlaß- und Auslaß-Steuerscheiben 48, 49 und die Verdichtungsstufe 7 Einlaß- und Auslaß-Steuerscheiben 50, 51.

Jede Steuerscheibe 40-51 ist mit zugeordneten Verbindungsschrauben 52 drehfest mit der Stirnseite des zugeordneten Kolbenläufers 10-15 verbunden. Die Steuerscheiben begrenzen in Richtung zum Maschinengehäuse 1 dort angeordnete Überströmkanäle 54-58. Die erste Verdichtungsstufe 2 hat an ihrer Stirnseite jenseits der Steuerscheibe 40 Zugang zu einer Ansaugöffnung 53, während den übrigen Verdichterstufen 2-6 im Maschinengehäuse 1 angeordnete Überströmkanäle 54-58 zugeordnet sind.

Zwischen der Auslaß-Steuerscheibe einer Stufe und einer benachbarten Einlaß-Steuerscheibe der darauffolgenden Stufe ist jeweils eine Zwischenwand 59-65 des Maschinengehäuses 1 angeordnet. Jede Zwischenwand 59-65 hat die Aufgabe, als unterbrechendes und abdichtendes Glied zwischen den Steuerscheiben zu wirken, und außerdem den Überströmkanal aufzunehmen und Träger des Maschinengehäuses 1 zu sein.

Am vorliegenden Ausführungsbeispiel sind nur beispielsweise 6 Verdichtungsstufen gezeigt, wobei die letzte Verdichtungsstufe 7 nur zur Vergleichmässigung des Enddruckes im Arbeitsmedium dient. Es ist selbstverständlich möglich, den beschriebenen Kompressor auch mit weniger oder mehr Verdichtungsstufen aufzubauen, wobei wichtig ist, daß durch die paketweise Anordnung im Maschinengehäuse 1 ein baukastenartiger Zusammenbau möglich ist. Die Stirnseite des Maschinengehäuses 1 wird hierbei von feststehenden, radial von innen nach außen laufenden Streben 76 gebildet, über die der Deckel 77 mit dem feststehenden Teil des Kugellagers 30 verbunden ist.

Das Volumen der aufeinanderfolgenden Arbeitsräume 23-28 ist im Verhältnis von etwa 2 : 1 zueinander abgestuft.

Im nachfolgenden Ausführungsbeispiel wird der Einfachheit halber nur der Übergang des Arbeitsmediums von der Verdichtungsstufe 2 auf die Verdichtungsstufe 3 in Verbindung mit der Auslaß-Steuerscheibe 41 und der Einlaß-Steuerscheibe 42 näher beschrieben. Die Beschreibung der anderen Übergänge zwischen den Verdichtungsstufen 3 und 4 bzw. zwischen 4 und 5 und 5 und 6 bzw. 6 und 7 erfolgt in analoger Weise.

Der Übergang des Arbeitsmediums von dem Arbeitsraum 23 der ersten Verdichtungsstufe 2 in den Arbeitraum 24 der zweiten Verdichtungsstufe 3 erfolgt derart, daß der im Arbeitsraum 23 umlaufende Kolben 16 gegen den Kolben 17 im Arbeitsraum 24 der zweiten Verdichtungsstufe 3 komprimiert. Hierzu ist Voraussetzung, daß in der Kompressionsphase die Auslaß-Steuerscheibe 41 der ersten Verdichtungsstufe 2 mit der Einlaß-Steuerscheibe 42 der zweiten Verdichtungsstufe 3 fluchtet und mit dem Überströmkanal 54 im Maschinengehäuse 1 luftschlüssig verbunden ist.

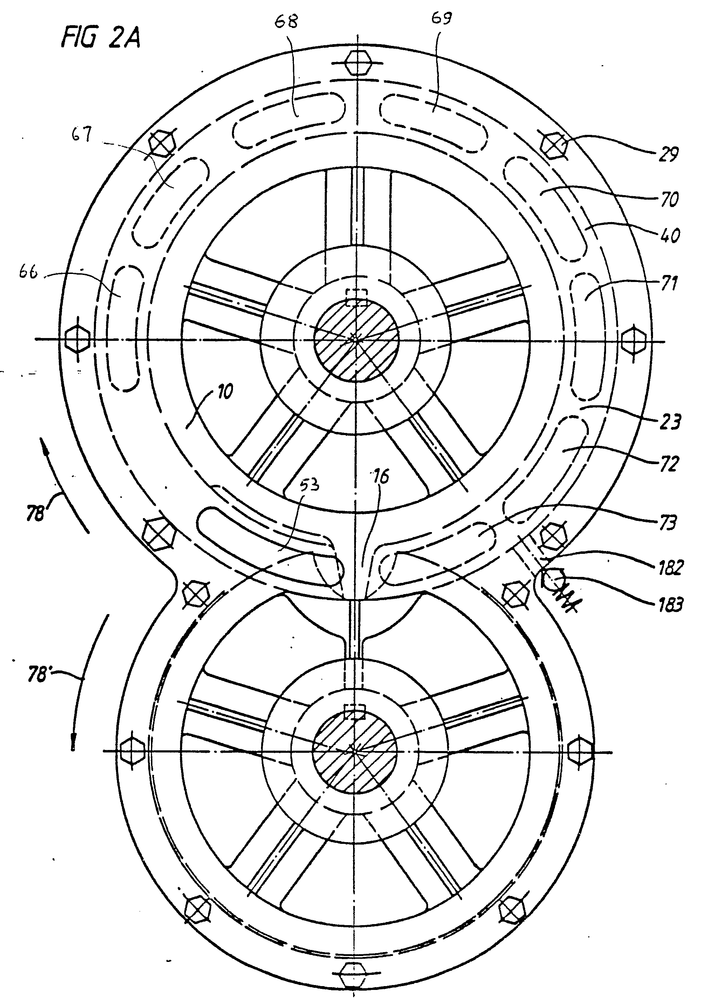

In Figur 2 ist die Stirnansicht in Richtung des Pfeiles II gezeigt. Hierbei ist der Kolbenläufer 10 mit seinem Kolben 16 gerade im Eingriff mit der Ausnehmung 74 im Absperrläufer 32. Gleichzeitig ist die eingangsseitige Ansaugöffnung 53 durch die drehfest mit dem Kolbenläufer 10 verbundene Einlaß-Steuerscheibe 40 verschlossen und im gesamten Arbeitsraum 23 befindet sich der gleiche Druck.

Der Kolbenläufer 10 mit seinem Kolben 16 läuft in Pfeilrichtung 78 im Uhrzeigersinn um, wobei gleichzeitig der Absperrläufer 32 im Gegenuhrzeigersinn 78' rotiert. Wenn sich der Kolben 16 des Kolbenläufers 10 etwa in der Mitte der Ansaugöffnung 53 befindet, schließt der Absperrläufer 32 mit der Kante seiner Ausnehmung 74 den Arbeitsraum 23 ab, damit kommt die Öffnung 73 in der Steuerscheibe 40, die sich ebenfalls in Pfeilrichtung 78 mitgedreht hat, in luftschlüssige Verbindung mit der Ansaugöffnung 53. Damit strömt Luft durch die Ansaugöffnung 53 in den Arbeitsraum 23 hinein. Gleichzeitig strömt die angesaugte Luft auch über die Öffnungen 73, 72, 71, 70, 69, 68, 67, 66. Die absteigende Nummernfolge bezieht sich darauf, daß die Öffnungen in dieser Reihenfolge nacheinander folgend in Deckung mit dieser Ansaugöffnung 53 gelangen. Nachdem der Kolben 16 auf seiner in Drehrichtung hinten liegenden Seite ansaugt, wurde nun über sämtliche Öffnungen 66 bis 73 Arbeitsmedium, z. B. Luft, in den Arbeitsraum 23 eingesaugt. Auf seiner Vorderseite hat nun der Kolben 16, wenn er seine Stellung nach Figur 2 nach einem vollen Umlauf erreicht hat, vor sich die angesaugte Luft.

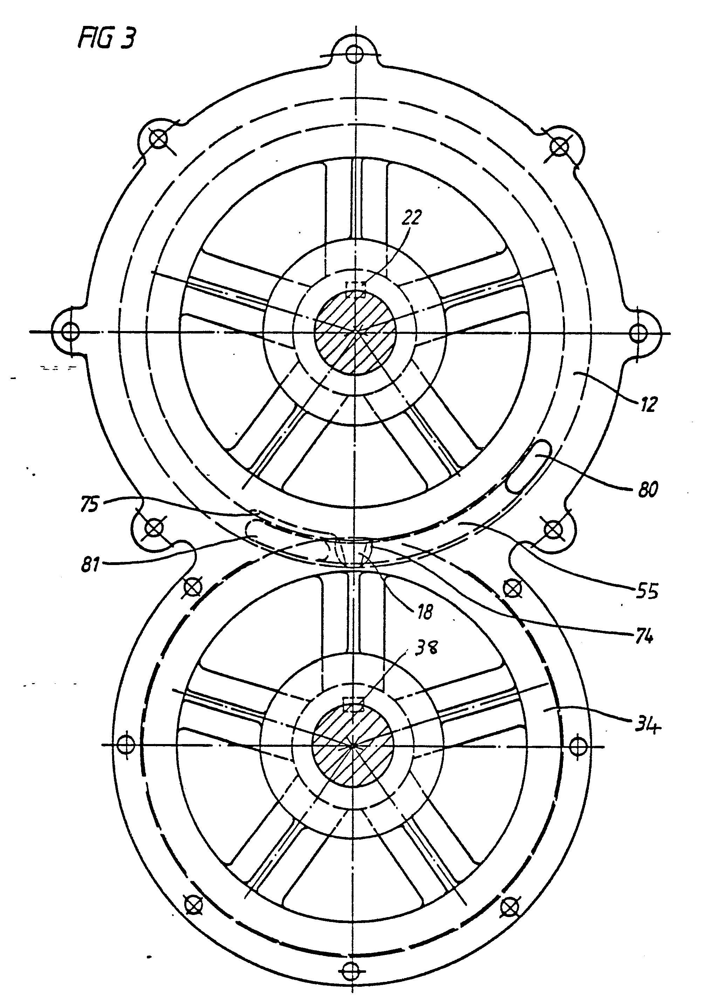

Wichtig ist hierbei die Beschreibung der Funktion der Auslaß-Steuerscheibe 41, die in der Zeichnung Figur 2 nicht näher ersichtlich ist, deren Funktion aber in Verbindung mit der Figur 3 erläutert werden kann.

Im beschriebenen Bewegungszustand des Kolbens 16 wird nun ein neuer Umlauf in Pfeilrichtung 78 durchgeführt. Hierbei dreht sich wiederum der Absperrläufer 32 in Pfeilrichtung 78 weiter, wobei sich seine Ausnehmung 74 nun vorbeidreht und dichtend am Außenumfang des Kolbenläufers 10 anliegt.

Wichtig ist, daß der Kolbenläufer 16 bei erneutem Umlauf die angesaugte Luft nun gegenüber der darauffolgenden Stufe, z. B. der Verdichtungsstufe 3, komprimiert, d. h. dort die Luft über den Überströmkanal, über die den Überströmkanal öffnende Auslaß-Steuerscheibe 41 und die Einlaß-Steuerscheibe 42 der Verdichtungsstufe in den Arbeitsraum 24 einschiebt.

In Figur 2a ist noch eine abgewandelte Ausführung eines Kompressors schematisiert dargestellt. Aus dieser Figur 2a ergibt sich, daß bei allen Verdichtungsstufen 2-6 eine nach außen mündende Öffnung 182 vorgesehen sein kann, welche mit einem Rückschlagventil 183 versehen ist. Diese Öffnung kann luftschlüssig mit einem zugeordneten Verbindungsschlauch versehen sein, der mit einem Windkessel verbunden ist.

Statt der Verwendung eines Verbindungsschlauches ist es auch möglich, den gesamten Kompressor in einem Druckbehälter einzusetzen, wobei dann die Öffnungen 182 in den Innenraum des Druckbehälters münden würden, und die Verbindungsschläuche dabei entfallen. Statt der Verwendung eines Windkessels ist es selbstverständlich auch möglich, jeden anderen Verbraucher mit diesen Öffnungen 182 zu koppeln.

Wenn man den Kompressor nach Figur 1-5 z. B. in einen Windkessel hineinsetzt, dann wird von der ersten Stufe das Arbeitsmedium angesaugt und verdichtet.

Je nachdem, wie hoch der Innendruck im Kessel ist, bleibt das Rückschlagventil 183 der jeweiligen Stufe geschlossen oder nicht. Ist der Druck im Windkessel niedrig, dann öffnet sich das Rückschlagventil 183 schon in der ersten Stufe. Hierdurch steigt der Druck an und das Rückschlagventil 183 der ersten Stufe bleibt geschlossen und es öffnet eines der darauffolgenden Rückschlagventile nur dann, wenn der vom Kompressor erzeugte Ansaugdruck in der jeweiligen Arbeitsstufe größer ist, als der Druck im Inneren des Windkessels.

Nach Figur 3 ist der Kolben 18 des Kolbenläufers 12 der vierten Verdichtungsstufe in seinem unteren Totpunkt, wobei zwei einen gegenseitigen Abstand einnehmende Überströmöffnungen 80, 81, die in der Zwischenwand 60 des Maschinengehäuses angeordnet sind, über einen zugeordneten Überströmkanal 55 verbunden sind. Durch diese Maßnahmen erfolgt die luftschlüssige Verbindung durch die Steuerscheiben hindurch von der einen Verdichterstufe zur nächsten.

Ringsum im Arbeitsraum 25 der Verdichtungsstufe 4 herrscht gleicher Druck. Nachdem der Druck rundherum gleich ist, benötigt man keine Abdichtung zwischen der Ausnehmung 74 des Absperrläufers 32 und dem zugeordneten Außenumfang des Kolbenläufers 12. Bei bekannten Rotationskolbenmaschinen ist die Abdichtung an dieser Stelle besonders kritisch ; nach der Erfindung muß der Kolben in Richtung zur Arbeitsraumwandung an dieser schwierig abzudichtenden Stelle nicht abgedichtet werden.

Wenn der Kolben 18 etwa 30° vor seinem unteren Totpunkt nach Figur 3 steht, öffnet eine Aussparung 75 zur Rückseite des Kolbens 18 hin. Auf der Kompressionsseite jeden Kolbens 16-21 ist also am Kolbenläufer 10-15 eine Aussparung 75 angeordnet, die gegenüber dem Außenumfang des Kolbenläufers 10-15 radial zurückspringt und einen geringeren, radialen Abstand von der Dreh — achse der Welle 8 aufweist. Hierdurch wird — sofern die Aussparung 75 in Wälzeingriff mit dem Absperrläufer 32-37 gelangt, der Arbeitsraum von der Kompressionszur Ansaugseite hin geöffnet.

Hierdurch wird eine unnötige Drucksteigerung an der Vorderseite des jeweiligen Kolbens vermieden, die einen großen Arbeitsaufwand verursacht und die Leistung der Maschine vermindern würde.

Die komprimierte Luft wird durch den Überströmkanal 56 direkt auf die Rückseite des darunterliegenden Kolbens 19 gedrückt.

Damit befindet sich die Luft im unteren Totpunkt des Kolbens 19 der darauffolgenden Verdichtungsstufe 5 ; nachdem alle Kolben 16-21 synchron umlaufen, befinden sich damit auch alle Kolben 16-21 im unteren Totpunkt.

Nachdem das Volumen aufeinanderfolgender Arbeitsräume 23-28 von aufeinanderfolgenden Verdichtungsstufen 2-7 sich immer in Bezug zu dem vorgehenden Arbeitsraum halbiert, steigt der Druck in aufeinanderfolgenden Arbeitsräumen je nach dem gewählten Volumenverhältnis entsprechend an.

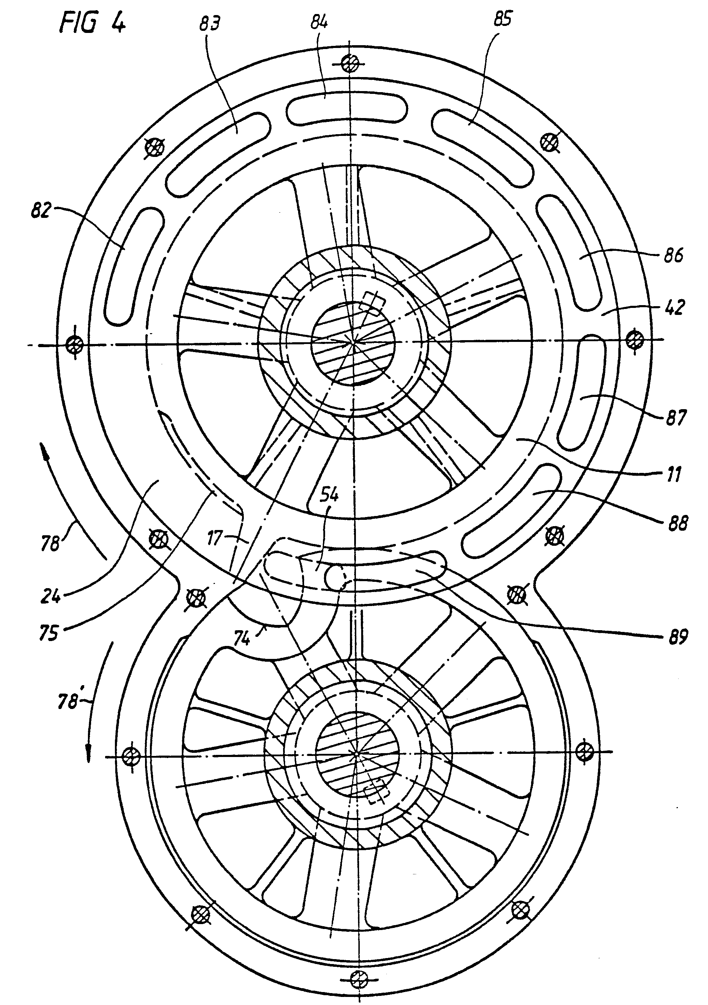

In Figur 4 wird die Funktion der Einlaß-Steuerscheibe 42 bei der zweiten Verdichtungsstufe 3 näher erläutert.

Wenn die erste Öffnung 89 in der Steuerscheibe 42 gerade die im Überströmkanal 54 erreicht hat, (wie in Fig. 4 dargestellt), erhält der Arbeitsraum 24 der zweiten Verdichtungsstufe 3 sein Arbeitsmedium von der ersten Verdichtungsstufe 2.

Mit fortlaufender Drehung der Steuerscheibe 42 und des drehfest damit verbundenen Kolbenläufers 11 in Pfeilrichtung 78 gelangen auch die weiteren Öffnungen 88, 87, 86, 85, 84, 83, 82 (in dieser Reihenfolge) in Deckung mit dem Überströmkanal 54, und das Volumen aus dem Arbeitsraum 23 der ersten Verdichtungsstufe 2 wird damit in das Volumen des Arbeitsraumes 24 der zweiten Verdichtungsstufe 3 eingeschoben.

Wichtig ist, daß in diesem Stadium der Einlaß der ersten Verdichtungsstufe 2 geschlossen ist, um zu vermeiden, daß das Medium umgekehrt in die erste Verdichtungsstufe 2 zurückströmt. Ab der in Figur 4 gezeichneten Stellung erfolgt die Kompression des Arbeitsmediums und zwar in den Arbeitsraum 25 der darauffolgenden Verdichtungsstufe 4.

Die Aussparung 75 im Kolbenläufer 11 hat hierbei die vorher beschriebene Funktion, d. h. alle Kolbenläufer der gesamten Maschine haben die gleiche Aussparung 74.

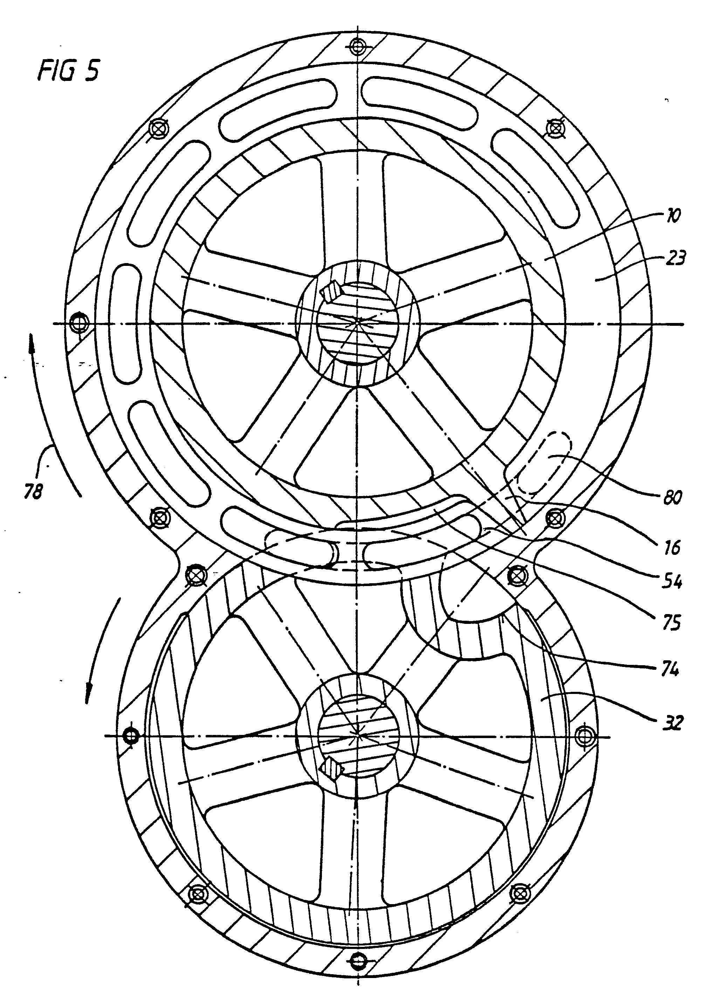

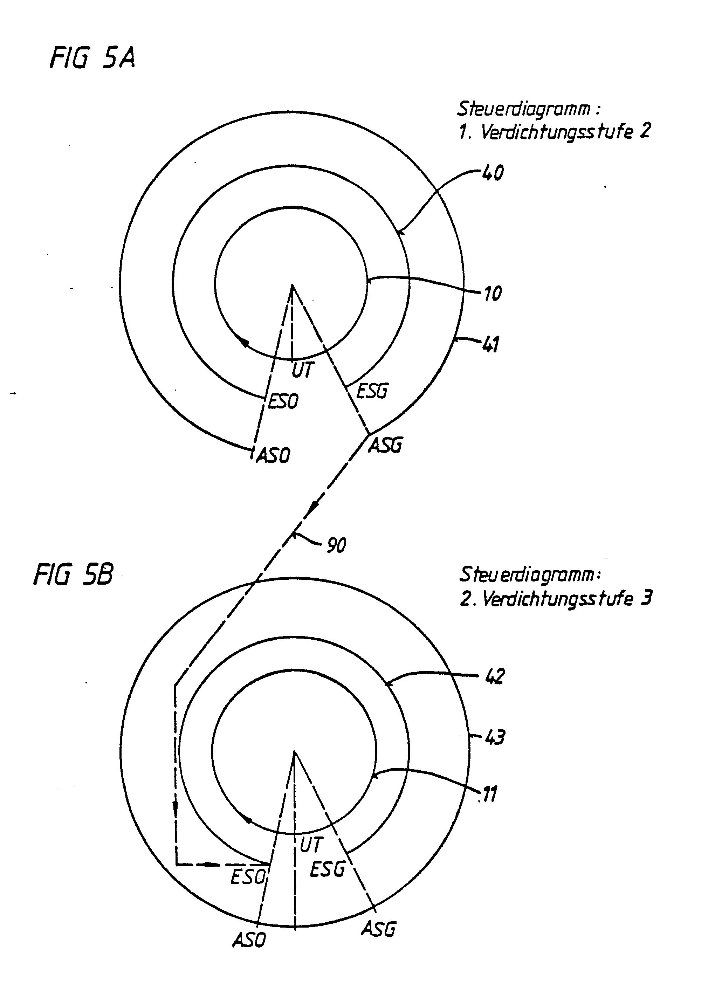

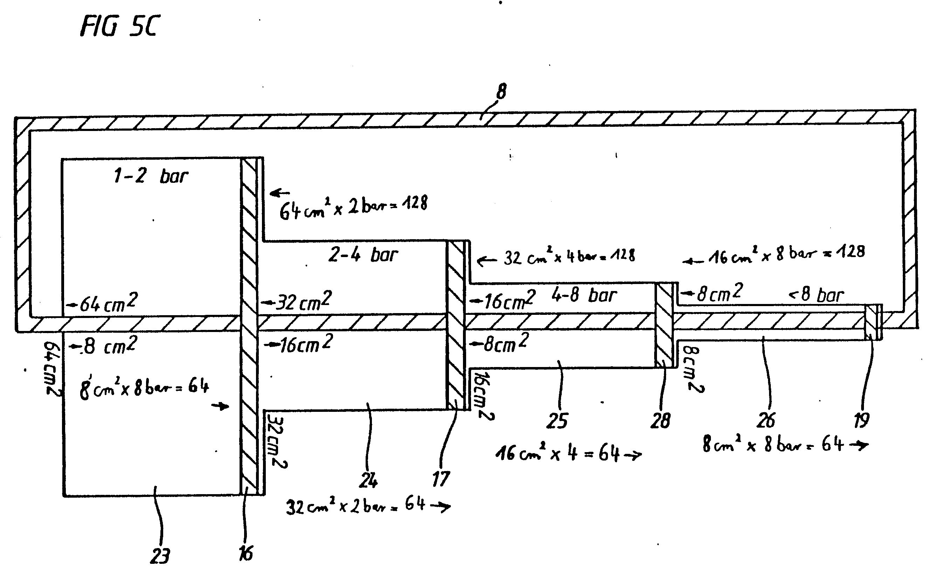

In Figur 5 ist ein Schnitt durch die erste Verdichtungsstufe 2 gezeigt und zwar in einer Stellung, wenn der Kolben 16 die einlaßseitige Überströmöffnung 80 zum Überströmkanal 54 passiert hat.

Wenn der Kolben in Pfeilrichtung 78 weiterlaufen würde, dann würde der Absperrläufer 32 immer noch am Außenumfang des Kolbenläufers 10 dichtend anliegen und damit würde eine unzulässig hohe und unwirtschaftliche Kompression des Arbeitsmediums erfolgen, was durch die folgenden Maßnahmen vermieden wird :

Die Aussparung 75 im Kolbenläufer 10 lässt gemäss der vorstehenden Beschreibung eine Verbindung zwischen der Vorderseite und der Rückseite des Kolbens 16 entstehen, so daß in der gezeigten Stellung rundherum im gesamten Arbeitsraum 23 derselbe Druck herrscht. In der darauffolgenden Verdichtungsstufe ist wiederum in dieser Stellung ein gleicher — jedoch höherer Druck — im Arbeitsraum vorhanden. Bis zum Erreichen des unteren Totpunktes erfolgt die Bewegung des Kolbens 16-21 in allen Stufen, ohne Druckerhöhung.

Erst ab der in Figur 4 gezeigten Stellung des Kolbens 16-21 erfolgt eine Kompression im Arbeitsraum 23-27.

In diesem Übergangsbereich ist also ein Raum, wo die Arbeitsmedien lediglich verschoben werden, ohne komprimiert zu werden.

In Figur 5a ist das Steuerdiagramm der ersten Verdichtungsstufe 2 und in Figur 5b das Steuerdiagramm der zweiten Verdichtungsstufe 3 gezeigt. Es ist erkennbar, daß die Einlaß-Steuerscheibe (Symbol E S) 40 etwa 5° nach dem unteren Totpunkt (Symbol UT) den Einlaß öffnet (Symbol ESo). Diese Stellung ist in Figur 4 anhand der Einlaß-Steuerscheibe 42 der zweiten Verdichterstufe 3 dargestellt.

Gleichzeitig öffnet in dieser Stellung auch die Auslaßsteuerscheibe 41 (Symbol ASo) der ersten Verdichterstufe 2, und gemäss der oben stehenden Beschreibung wird während des gesamten Verdichtungshubes der gesamte Inhalt des Arbeitsraumes 23 über die geöffnete Auslaß-Steuerscheibe 41 gemäss dem gestrichelten Pfeil 90 in den Einlass der Einlaß-Steuerscheibe 42 der zweiten Verdichterstufe 3 eingeschoben. Kurz vor Erreichen des UT schließt die Einlaß-Steuerscheibe 40 (Symbol ESg) und auch die Auslaß-Steuerscheibe 41 (Symbol ASg). Durch den Pfeil 90 wird symbolisiert, daß für den Drehwinkel von etwa 300° das Kammervolumen der ersten Verdichtungsstufe 2 in den Arbeitsraum 24' der zweiten Verdichtungsstufe 3 eingeschoben wird. Das Steuerdiagramm der zweiten Verdichterstufe 3 ist mit dem der ersten Verdichterstufe 2 identisch, und alle anderen darauffolgenden Verdichterstufen 4, 5, 6, 7 haben das gleiche identische Steuerdiagramm, wie die erste und zweite Verdichterstufe. In analoger Weise wird das im Arbeitsraum 24 der zweiten Verdichterstufe 3 komprimierte Medium bei geöffneter Auslass-Steuerscheibe 43 in die 3. Verdichterstufe 4 eingeschoben und so fort.

Die Funktion des Kompressors bei jeweils sich im Kammervolumen halbierenden Arbeitsräumen 23-27 wird unter Bezugnahme auf Figur 5c anhand eines schematisierten Ersatzbildes erläutert.

Die Funktion eines Kompressors nach den Figuren 1-4 ist etwa mit einem Differentialkolben vergleichbar, der auf einer einen Seite eine relativ große Kolbenfläche und auf der anderen Seite die Hälfte dieser Kolbenfläche aufweist.

Dieser Differentialkolben läuft in einem Arbeitsraum bestimmter Größe.

Zur Bestimmung der Kraft auf dem Kolben können die sich im Arbeitsraum aneinander gegenüberstehenden Kolbenflächen subtrahiert werden, so daß die sich hieraus ergebende Kolbenfläche als wirksame Kolbenfläche des Differentialkolbens anzusprechen ist.

Wird nun eine Druckerhöhung im Arbeitsraum durch Einleiten eines Druckmediums erzeugt, dann bewegt sich der Differentialkolben in axialer Richtung auf seine größere Kolbenfläche zu.

Nach diesem Prinzip arbeitet der Kompressor nach der Erfindung, denn als Differentialkolben sind jeweils die Kolbenflächen zweier aufeinanderfolgender Verdichtungsstufen zu bezeichnen.

Die erste Verdichtungsstufe 2 hat einen Kolben 16 mit relativ großer Fläche, während die darauffolgende zweite Verdichtungsstufe 3 einen Kolben 17 mit der halben wirksamen Fläche hat.

Dieselben Verhältnisse wiederholen sich von der zweiten Verdichtungsstufe 3 auf die dritte Verdichtungsstufe 4 und so fort.

Der Antrieb von Welle 8 aus muß dann nur noch die hälfte sein, im Vergleich zu einem Kompressor, der eine solche Differentialkolbenanordnung nicht aufweist.

Bei der Erfindung sind hintereinandergeschaltete Arbeitsräume 23-27 vorhanden, deren Volumen mit aufeinanderfolgender Stufe stets halbiert ist. In jedem Arbeitsraum bewegt sich ein Arbeitskolben 16-20, der in seiner Fläche ebenfalls der Hälfte des Arbeitskolbens der davor liegenden Stufe entspricht.

Aus Vereinfachungsgründen wurde vom Größenverhältnis 2 : 1 ausgegangen, obwohl jedes andere Verhältnis auch möglich ist ; ferner werden in Figur 5c nur die Kolben 16-19 dargestellt.

Das Prinzip liegt nun darin, daß in dem ersten Arbeitsraum 23 bei der Bewegung des Kolbens 16 von links nach rechts der Druck zunächst von 1 auf 2 bar z. B. steigt. Gleichzeitig wird hierdurch das Volumen des Arbeitsraumes 23 in das halb so große Volumen des darauffolgenden Arbeitsraumes 24 eingeschoben, worauf in diesem der Druck von 2 auf 4 bar steigt. Nachdem alle Kolben 16, 17, 18, 19 mechanisch über die Welle 8 fest miteinander gekoppelt sind, steigt in dem darauffolgenden Arbeitsraum 25 der Druck von 4 auf 8 bar und in dem hierauf folgenden Arbeitsraum 26 der Druck von 8 auf 16 bar.

Es kommt hierdurch also zu einer extremen Druckerhöhung. Das Prinzip-Schaubild nach Fig. 5c stimmt nicht genau mit dem Prinzip des Drehkolben-Kompressors nach der Erfindung überein, denn bei der vorliegenden Erfindung sind keine Verbindungsstangen zwischen den Kolben vorhanden, welche die wirksame Fläche des jeweiligen Kolbens reduzieren.

Bei der Erfindung sind die Kolben 16-21 drehfest mit der Welle verbunden und ragen deshalb nicht in die Arbeitsräume hinein, so wie dies bei dem Prinzipbild nach Fig. 5c gezeigt ist.

Wichtig ist, daß alle Kolben 16-21 mechanisch untereinander gekoppelt sind und zwar über die drehfeste Verbindung mit der Welle 8.

Im Ausführungsbeispiel nach Figur 5c ist die mechanische Kopplung durch die Motorwelle 8 durch eine abgeknickte Welle hinter dem Kolben 19 schematisiert dargestellt, die auf der Rückseite des ersten Kolbens 16 wirkt.

Es wird also mit geringer Antriebsenergie ein hoher Nutzdruck in der letzten Stufe erzielt, weil die Arbeitsräume der aufeinanderfolgenden Verdichterstufen immer kleiner werden, so daß der Druck entsprechend erhöht wird.

Die letzte Verdichtungsstufe 6 ist genauso groß, wie eine weitere, darauffolgende Verdichtungsstufe 7, die nicht als Verdichtungsstufe, sondern als Verteilerstufe wirkt, um entsprechende Druckschwankungen zu beseitigen.

Diese Verdichtungsstufe 7 weist ebenso einen Kolbenläufer 15 mit einem Kolben 21 auf, und ist identisch mit allen anderen Stufen. Die Druckschwankungen aufeinanderfolgender Verdichtungsstufen entstehen nur deshalb, weil die Arbeitsräume aufeinanderfolgender Verdichtungsstufen 2-6 unterschiedlich groß sind. Wenn man aber die letzten beiden Verdichtungsstufen 6 und 7 gleich ausbildet, dann erfolgen solche Druckschwankungen nicht, denn es erfolgt während des Kompressionshubes keine Drucksteigerung im Arbeitsraum.

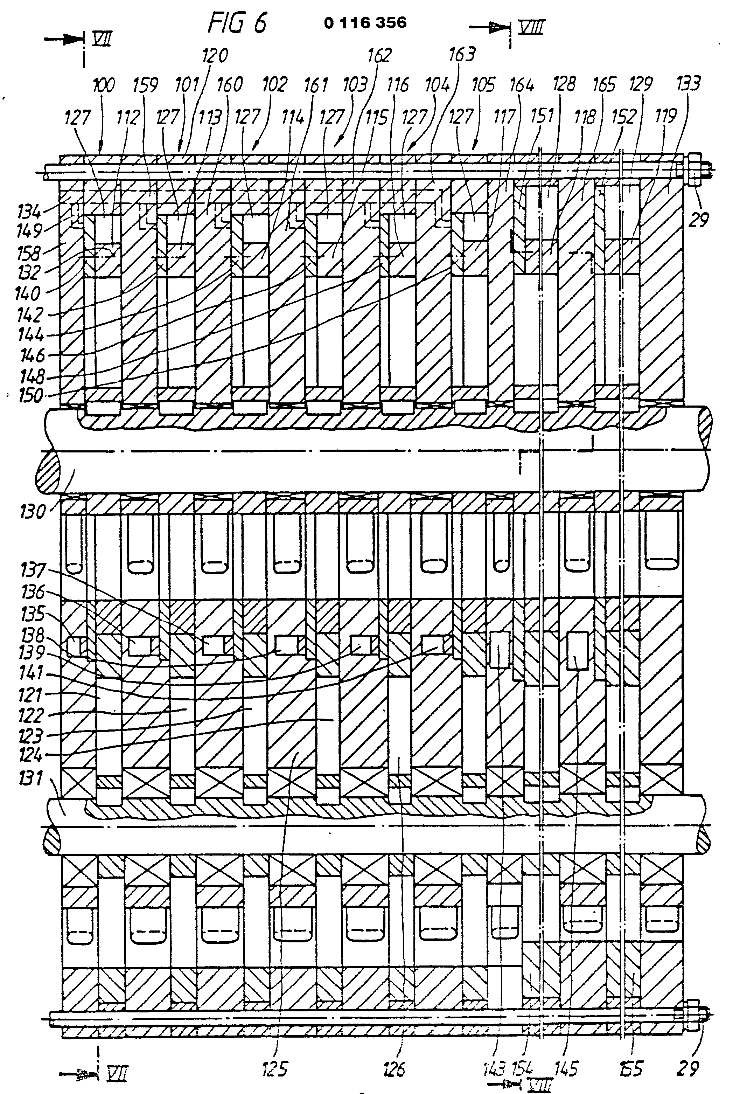

Die Verteilerstufe (Verdichterstufe 7) liefert also den maximalen, durch den Kompressor erzeugten Druck an die nachfolgend erläuterte Verbrennungsmaschine. Diese wird auch als Expansionsmaschine bezeichnet, und wird anhand der Figur 6-9 nachstehend erläutert.

In Figur 6 ist das Ausführungsbeispiel eines sechsstufigen Dieselmotors mit einem zusätzlichen Auspuffteil gezeigt, in dem die ausgeschobenen Auspuffgase noch zur zusätzlichen Arbeitsleistung herangezogen werden.

Es handelt sich also um eine Expansionsmaschine, die neben ihrer Ausführung als Dieselmotor selbstverständlich auch noch in anderer Form, z. B. als Verbrennungsmaschine mit außenliegender Gemischbildung, ausgebildet sein kann. Die einzelnen Teile des Motors stimmen mit denen des vorher beschriebenen Kompressors überein, mit Ausnahme der Tatsache, daß der Kompressor unterschiedlich große Arbeitsräume 23-28 und daran angepasste Maschinenteile hat, während beim nach — folgend beschriebenen Motor die Arbeitsräume und die darin laufenden Maschinenteile gleich groß sind.

In analoger Weise, wie vorhin anhand des Kompressors geschildert, besteht die gezeigte Verbrennungsmaschine aus sechs Expansionsstufen 100-105. Jede Expansionsstufe weist einen Kolben 106-111 auf und jeder Kolben ist an einem Kolbenläufer 112-117 befestigt, wobei jeder Kolbenläufer synchron in Pfeilrichtung 78 umdreht. Die Kolbenläufer 112-117 sind drehfest mit Hilfe von Nutensteinen auf einer zugeordneten Motorwelle 130 befestigt. Zusätzlich sind auf der Motorwelle 130 mit Hilfe von gleichartigen Nutensteinen zwei Kolbenläufer 118-119 für den Auspuffteil angeordnet.

Mit der Motorwelle 130 synchron sich drehend und von dieser angetrieben, ist eine zweite Welle 131 vorgesehen, auf der drehfest mit Hilfe von Nutensteinen mehrere parallel arbeitende Absperrläufer 121-126 angeordnet sind. Jeder Absperrläufer arbeitet in der Weise, wie vorstehend anhand des Kompressors geschildert wurde. Jeder Absperrläufer dreht sich in Pfeilrichtung 78' und weist an seinem Außenumfang eine Ausnehmung 174 auf, wobei außerhalb dieser Ausnehmung 174 der Absperrläufer 121-126 dichtend am Außenumfang des jeweilig zugeordneten Kolbenläufers 112-117 anliegt. Das gleiche gilt in Bezug auf die Absperrläufer 154, 155, welche den Kolbenläufern 118, 119 der Auspuffkammern zugeordnet sind.

Nachdem die Verbrennungsräume der Verbrennungsmaschine funktionell gleich sind, sind diese mit einem einheitlichen Bezugs-Zeichen 127 als « Arbeitsraum » bezeichnet. Den zwei Kolbenläufern 118, 119 des Auspuffteils sind die Arbeitsräume 128, 129 zugeordnet.

Jeder Kolbenläufer 112-118 ist mit zugeordneten Schrauben 132 mit einer jeweils stirnseitig angebrachten Einlaß-Steuerscheibe 140, 142, 144, 146 drehfest verbunden. Die jeweilige Steuerscheibe ist konzentrisch zu der Motorwelle 130 angebracht.

In analoger Weise sind im Auspuffteil bei den dort gezeigten zwei Zylindern der Kolbenläufer 154, 155 mit zugeordneten Einlaß-Steuerscheiben 151, 152 verbunden.

Das gesamte Gehäuse 120 wird durch Schrauben 29 zusammengehalten. Die Zeichnungen nach der vorliegenden Erfindung sind so gehalten, als daß der Kompressor nach den Figuren 1-5 die Verbrennungsmaschine nach der Figur 6 antreiben kann.

Im Gehäuse 120 der Verbrennungsmaschine sind ortsfeste Zwischenwände angebracht, die vordere Zwischenwand 158 wird im Abstand von einer weiteren Zwischenwand 159-164 abgetrennt. Der Zwischenraum zwischen den jeweiligen Zwischenwänden 158-164 definiert jeweils eine Expansionsstufe 100-105.

Die Zwischenwände 158-163 sind von einem axial durchgehenden Verbindungskanal 134 durchbrochen, von dem knieförmige Stichkanäle 149 abzweigen, welche in zugeordnete Überströmkanäle 135-139, 141 einmünden.

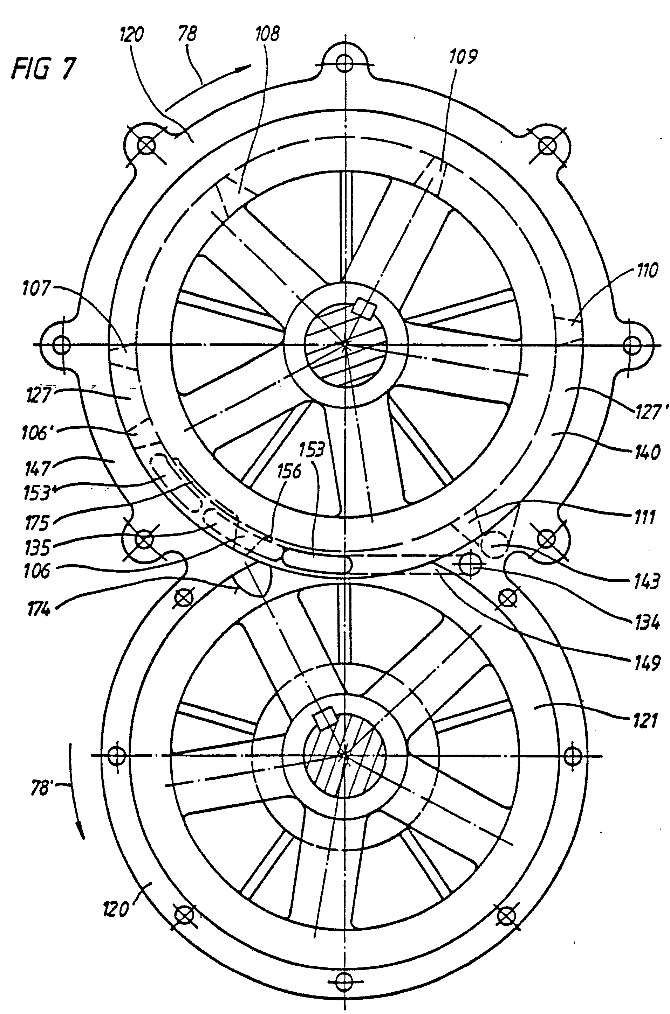

Es wird noch darauf hingewiesen, daß aus Übersichtlichkeitsgründen in der Zeichnung Figur 6 der Verbindungskanal 134 zusammen mit den zugeordneten Stichkanälen 149 im oberen Teil der Zeichnung gestrichelt angebracht wurde, obwohl — wie es in Fig. 7 dargestellt ist und in Fig. 6 im mittleren Teil — die Überströmkanäle 135, 139, 141 sich im mittleren Teil des Maschinengehäuses 120 befinden.

Es handelt sich also bei der gestrichelten Darstellung in Figur 6 oben um eine schematisierte Übersicht, welche die Funktion des Anmeldungsgegenstandes verdeutlichen soll.

Auch in den Zwischenwänden 164, 165 des Auspuffteils sind entsprechende Überströmkanäle 143, 145 angeordnet. Die hintere Begrenzung des Maschinengehäuses 120 wird durch den Abschlußdeckel 133 gebildet.

Die Figur 7 zeigt einen Schnitt gemäss der Linie VII-VII in Fig. 6 und zwar die Stirnansicht der ersten Expansionsstufe 100. In schematisierter Darstellung ist die Stellung des Kolbens 106 der ersten Expansionsstufe 100 in zwei verschiedenen, aufeinanderfolgenden Zeitabläufen gezeigt, wobei der Kolben in Pfeilrichtung 78 rotiert und in seiner zeitlich danach liegenden Stellung als Kolben 106' bezeichnet ist.

Ebenso ist schematisiert in Figur 7 dargestellt, daß die anderen Kolben 107-111 in Bezug zu dem Kolben 106 der ersten Expansionsstufe 100 zueinander winkelversetzt sind, und zwar im Winkelmasse von 60° von Kolben zu Kolben.

Verwendet man eine Verbrennungsmaschine mit einer anderen Anzahl von Expansionsstufen 100-105, dann ergibt sich ein anderes Winkelmass.

In analoger Weise — wie vorhin dargestellt — erfolgt wiederum die Abdichtung des Arbeitsraumes 127 der ersten Expansionsstufe 100 mit dem in Pfeilrichtung 78' rotierenden Absperrläufer 121. Die Ausnehmung 174 im Absperrläufer 121 wird dazu verwendet, damit der Kolben 106 des Kolbenläufers 112 sich am Absperrläufer 121 vorbeibewegen kann.

Aus Vereinfachungsgründen wird lediglich der Arbeitsablauf in der ersten Expansionsstufe 100 erläutert ; die gleiche Erläuterung gilt in analoger Weise für alle anderen Expansionsstufen 101-105.

In der gezeigten Stellung in Figur 7 befindet sich der Kolben 106 des Kolbenläufers 112 kurz nach Verlassen des unteren Totpunktes. Über den Überströmkanal 143 gelangen zunächst die verbrannten Gase in den Auspuffteil und zwar in den Arbeitsraum 128. Über den Verbindungskanal 134 strömt bei geöffneter Einlass-Steuerscheibe 140 Gas in den Arbeitsraum 127. In gleicher Weise wird für alle anderen Arbeitsräume 127 das Gas eingefüllt.

Dieses Gas (Arbeitsmedium) kommt von dem vorher beschriebenen Kompressor, der annähernd ein Verdichtungsverhältnis von 1 : 20, bezogen auf das Volumen hat, wenn man einen weiteren Druckanstieg durch die Temperaturerhöhung während des Arbeitsvorganges in Rechnung stellt, erhöht sich das Verdichtungsverhältnis entsprechend.

Die von dem Kompressor komprimierte Luft gelangt über den Verbindungskanal 134, den knieförmigen Stichkanal 149, den Überströmkanal 135, durch die Öffnung 153 in der Steuerscheibe 140 in den Arbeitsraum 127 der ersten Expansionsstufe 100.

In Figur 7 ist dieses Überströmen kurz vor dem Beginn gezeigt, d. h. das Überströmen beginnt erst, wenn sich die Öffnung 153 in der Steuerscheibe 140 mit dem Überströmkanal 135 in der Zwischenwand 158 schneidet.

Sobald die hintere Kante der Öffnung 153 der Einlass-Steuerscheibe 140 die in Drehrichtung vorne liegende Kante des Überströmkanals 135 verlässt, ist der Einströmvorgang in den Arbeitsraum 127 abgeschlossen und es erfolgt am Ort der Zündkerze 147 die Einspritzung eines Brennstoffes, z. B. eines Dieselbrennstoffes.

Es erfolgt nun eine Verbrennung in der Brennkammer 127, der Kolben befindet sich dabei in der Stellung 106'. Er wird dadurch in Drehrichtung 78 vorangetrieben, und er dreht sich, bis in die Stellung des Kolbens 111, wo das im Arbeitsraum 127 expandierte Gas über den Überströmkanal 143 in den Arbeitsraum 128 des Auspuffteils, einströmt, wobei die Einlaß-Steuerscheibe 151 geöffnet ist. Wichtig ist hierbei, daß die Arbeitsräume 127 der ersten, zweiten und dritten Expansionsstufe 100-102 in den Arbeitsraum 128 der ersten Auspuffstufe eingeleitet werden, während die expandierten Gase der vierten bis sechsten Expansionsstufe 103-105 in den Arbeitsraum 129 der zweiten Auspuff-Stufe eingeleitet werden.

Die Arbeitsräume 128, 129 der Auspuffstufen sind so groß dimensioniert, daß der Motor hierdurch nicht gebremst wird, sondern daß die Restenergie der Auspuffgase noch zum zusätzlichen Antrieb des Motors verwendet wird. Die Summe des Volumens der beiden Arbeitsräume 128, 129 entspricht dem Volumen des Arbeitsraumes 23 der ersten Verdichtungsstufe 2 des vorher beschriebenen Kompressors.

Für die anderen Steuerscheiben 142, 144, 146, 148, 150 der übrigen Expansionsstufen 101-105 gilt die analoge Erläuterung, wie sie in Figur 7 gegeben wurde, d. h. die Öffnung 153 der zugeordneten Einlaß-Steuerscheibe 142, 144, 146, 148, 150 befindet sich etwa 10° in Drehrichtung hinter den zugeordneten Kolben 107-111. Auf diese Weise arbeiten alle sechs Kolben 106-111 zeitversetzt (und winkelversetzt) auf die zugeordnete Motorwelle 130. Das Arbeitsmedium liegt dabei in hochgespannter Form im Verbindungskanal 134 vor und wird entsprechend der Drehung der Steuerscheiben 140, 142, 144, 146, 148, 150 in die zugeordneten Brennkammern 127 eingeleitet.

Der anderen Arbeitskammer 129 der anderen Auspuffstufe ist der Überströmkanal 145 zugeordnet. Nach entsprechender Arbeitsleistung in den Auspuffzylindern werden die Arbeitsmedien in einen Schalldämpfer abgeleitet und entfernt.

Es wird noch darauf hingewiesen, daß die Aussparung 175 im Kolbenläufer 132 die gleiche Funktion hat, wie die Aussparung 75 beim zugeordneten, vorher beschriebenen Kompressor. Es gilt daher die gleiche Erläuterung.

Sobald der Kolben 106 den Überströmkanal 143 für den Auspuff passiert hat, öffnet die Aussparung 175 die Verbindung zum Arbeitsraum 127', so daß im gesamten Arbeitsraum 127' der gleiche Druck herrscht. Erst, wenn der Kolben 106 sich in Pfeilrichtung 78 weiterdreht, und erst wenn die Rückseite des Kolbens 106 wieder mit dem Absperrläufer 121 schließt, sind die vom Kolben 106 getrennten Arbeitskammern getrennt.

Es wird ferner darauf hingewiesen, daß in Arbeitsrichtung hinter dem jeweiligen Kolben 106 eine Spülöffnung 156 hinter der jeweiligen Einlaß-Steuerscheibe (im vorliegenden Ausführungsbeispiel also hinter der Einlaß-Steuerscheibe 140) angebracht ist. Diese Spülöffnung 156 hat den Zweck, die Restgase aus dem Arbeitsraum 127' zu spülen, weil in dem Zeitpunkt, wenn sich der Kolben 106 im Bereich der Ausnehmung 174 befindet, überdeckt sich die Spülöffnung 156 mit einer nicht näher dargestellten Öffnung in der zugeordneten Zwischenwand, die mit dem Überströmkanal 134 verbunden ist.

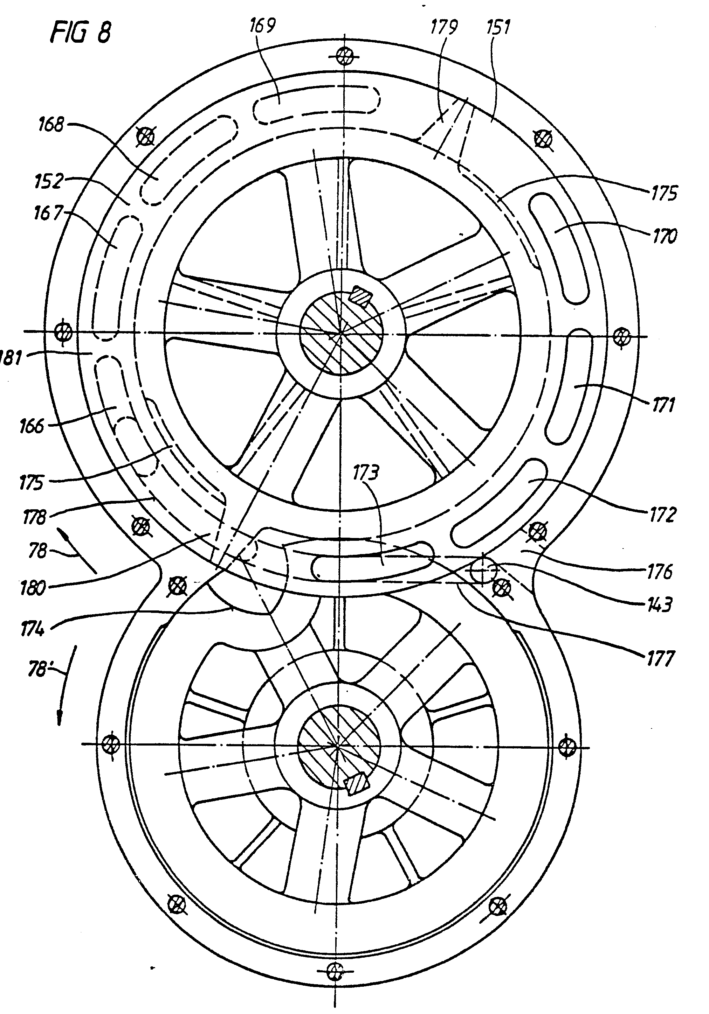

Die Figur 8 zeigt einen Schnitt gemäss der Linie VIII-VIII in Figur 6, wobei der Einfachheit halber sowohl die Einlaß-Steuerscheibe 151 des ersten Auspuffteils, als auch die Einlaß-Steuerscheibe 152 der zweiten Auslass-Steuerscheibe zusammengefasst dargestellt sind.

Jede Einlass-Steuerscheibe 151, 152 ist jeweils nur zur Hälfte dargestellt, wobei die andere, nicht zeichnerisch dargestellte, Hälfte vollständig geschlossen ist, also nicht die jeweiligen Öffnungen 166-173 aufweist.

Dem Kolben 179 des Kolbenläufers 118 sind die Öffnungen 166-169 der Steuerscheibe 152 zugeordnet, während dem Kolben 180 die Öffnungen 170-173 der Steuerscheibe 151 zugeordnet sind.

In der gezeigten Stellung nach Figur 8 überschneidet sich die Öffnung 166 mit der Öffnung 178 des Verbindungskanals 177, der mit dem Überströmkanal 143 verbunden ist.

Es ist hierbei die letzte Phase des Einströmens von Auspuffgasen in den Arbeitsraum 181 des Kolbens 179 gezeigt, denn der Beginn des Einströmens erfolgt mit der in Drehrichtung vorne liegenden Kante der Öffnung 169 mit der in Drehrichtung hinten liegenden Kante der Öffnung 178 des Überströmkanals 143.

In der gezeigten Stellung ist also gerade die letzte Phase des Einströmens der Auspuffgase über die Öffnung 166 in den Arbeitsraum 181 gezeigt.

Der Kolben 179 bewegt sich dadurch in Drehrichtung 78 weiter und leistet noch weitere Arbeit.

In analoger Weise erfolgt das Einströmen von Auspuffgasen für den Kolben 180, dem die Öffnungen 170-173 in der Steuerscheibe 151 zugeordnet sind.

In Drehrichtung vor jedem Kolben ist jeweils die gleiche Aussparung 175 angeordnet, welche die gleiche Funktion hat, wie vorher beschrieben wurde, d. h. bei Überstreichen der Auspufföffnung 176 öffnet die Aussparung 175 den Arbeitsraum, so daß vor und hinter dem jeweiligen Kolben 179, 180 gleicher Druck herrscht. Damit werden unnötige Kompressionen und Gegendrücke gegen den Kolben vermieden.

Nach der erfolgten Vorbeidrehung des jeweiligen Kolbens 179, 180 an der Auspufföffnung 176 werden die Auspuffgase in einem nicht zeichnerisch näher dargestellten Schalldämpfer eingeleitet.

Bei dem Verbrennungsmotor ist noch wichtig, darauf hinzuweisen, daß er bei einer vollen Umdrehung 6 × zündet, weil sechs winkelversetzte Kolben winkelversetzt an der Motorwelle angeordnet sind. Im Verhältnis zu einem Otto-Motor zündet also der erfindungsgemässe Verbrennungsmotor 12 ×, während ein vergleichbarer Hübkolbenmotor nur 1 × zündet.

Auf diese Weise überschneiden sich die Kurven des Drehmomentes der einzelnen Kolben und es ergibt sich dadurch eine sehr gleichmässige Drehmomentenabgabe und eine Leistungssteigerung dadurch, daß wegen der sich überschneidenden Drehmomentkurven im Überschneidungsbereich das Drehmoment addiert werden muss, und dadurch es zu einer Leistungs-Kommulierung kommt, d. h. also die Maschine mehr leistet, als z. B. sechs voneinander getrennte Kolbenläufer.

Eine weitere Leistungssteigerung wird dadurch erreicht, daß in die Arbeitsräume 128, 129 des Auspuffteils während eines Arbeitshubes Wasser eingespritzt wird. Durch die Verdampfung des Wassers entsteht eine weitere Druckerhöhung im jeweiligen Arbeitsraum 128, 129.

**Patentansprüche**

1. Rotationskolbenmaschine, bestehend aus einem Verbrennungsmotor, einem Kompressorteil und einem Abgasstufenteil, wobei der Verbrennungsmotor aus mehreren kreisförmigen, axial hintereinander auf einer Welle (8, 130) befestigten Kolbenläufern (10-15 ; 112-119) besteht, von denen jeder mindestens einen Kolben (16-21 ; 106-111) aufweist, der an einer zugeordneten, ruhenden Arbeitsraumwandung jeweils eines kreiszylindrischen Arbeitsraumes (23-28 ; 127, 127', 128, 129) entlang läuft und der sich mit einer Ausnehmung (74, 174) mindestens eines sich auf dem Kolbenläufer (10-15 ; 112-119) abwälzenden Absperrläufers (32-37 ; 121-126 ; 154, 155) in Kämmeingriff befindet, wobei die Wellen (8 ; 9 ; 130, 131) des Kolbenläufers und des Absperrläufers durch Koppelzahnräder miteinander verbunden sind und das gasförmige Medium durch einen oder mehrere mit der Welle (8) rotierende Ventilvorrichtungen in den jeweiligen Arbeitsraum ein- und ausgeleitet wird, dadurch gekennzeichnet, daß der Verbrennungsmotor, der Kompressor- und der Abgasstufenteil auf einer gemeinsamen Welle sitzen und jeder Kolbenläufer nur jeweils einen Kolben aufweist, daß der Verbrennungsmotor als Mehr-Kammer-Motor ausgebildet ist, in dem die parallel geschalteten Arbeitsräume die Brennkammer bilden, daß sowohl der Kompressor- als auch der Abgasstufenteil jeweils aus einer mehrstufigen Einheit bestehen, in der jeweils die Arbeitsräume hintereinander geschaltet sind, daß die Arbeitsräume durch Ventilvorrichtungen voneinander getrennt sind, daß jede Ventilvorrichtung zur Ein- bzw. Ausleitung des Arbeitsmediums in den jeweiligen Arbeitsraum (23-28 ; 127, 127', 128, 129) aus jeweils einer drehfest mit jedem Kolbenläufer (10-15 ; 112-119) stirnseitig verbundenen Steuerscheibe (40-51 ; 140, 142, 144, 146, 150, 151, 152) besteht, welche am Umfang verteilt Öffnungen (66, 73 ; 82-89 ; 153 ; 166-173) aufweist, welche mit zugeordneten Öffnungen (53, 80, 81, 178) von Überströmkanälen (54-58 ; 135-139, 141, 143, 145) zur Überschneidung bringbar sind, die in die Arbeitsräume (23-28 ; 127, 127', 128, 129) abteilenden Zwischenwänden (59-65 ; 158-164) des Maschinengehäuses (1, 120) angeordnet sind, und daß im Kompressorteil die Öffnungen in den Steuerscheiben gegenüber den Öffnungen der Überströmkanäle so angeordnet sind, daß während eines Arbeitshubes die Verbindung von einem größeren Arbeitsraum zu einem sich daran anschließenden kleineren Arbeitsraum während einer Drehung von etwa 300 Grad ständig geöffnet ist, und daß die letzte Stufe (7) des Kompressorteils über einen gehäusefesten Verbindungskanal (134) das hochkomprimierte Arbeitsmedium über die motorseitige Ventilvorrichtung in die Arbeitsräume (127) des Mehr-Kammer-Motors einleitet.

2. Rotationskolbenmaschine nach Anspruch 1, dadurch gekennzeichnet, daß in dem mehrstufigen Kolbenkompressorteil die einlaß- und auslaßseitig angeordneten Steuerscheiben (40-51) Arbeitsräume (23-28) des Kompressorteils begrenzen, deren Volumen von Stufe zu Stufe abnimmt.

3. Rotationskolbenmaschine nach Anspruch 2, dadurch gekennzeichnet, daß das Volumenverhältnis stufenweise aufeinander folgender Arbeitsräume (23-26) des Kolbenkompressorteiles 2 : 1 ist.

4. Rotationskolbenmaschine nach Anspruch 1, dadurch gekennzeichnet, daß auf der Kompressionsseite des Kolbenläufers (10-15 ; 112-119) eine gegenüber dem Außenumfang radial zurückspringende Aussparung (75, 175) mit geringerem Abstand von der Drehachse des Kolbenläufers (10-15 ; 112-119) angeordnet ist, welche in ihrem Bereich den dichtenden Wälzeingriff mit dem Absperrläufer (32-37 ; 121-126 ; 154, 155) unterbricht und die so angeordnet ist, daß nach Schließung der Öffnung (53, 80, 81, 178) des Überströmkanals (54, 58 ; 135-139 ; 141, 143, 145) durch die Steuerscheibe (40, 42, 44, 46, 48, 50 ; 140, 142, 144, 146, 148, 150) eine Verbindung für das Arbeitsmedium zwischen der Kompressions- und der Ansaugseite des Kolbenläufers (10-15 ; 112-119) entsteht (Figur 2-5, 7, 8).

5. Rotationskolbenmaschine nach Anspruch 1, dadurch gekennzeichnet, daß die einzelnen Arbeitsräume (23-28) des Kolbenkompressors mit den Verbrauchern über Öffnungen (182) verbunden sind, welche durch einstellbare Rückschlagventile (183) verschließbar sind, (Fig. 2a).

6. Rotationskolbenmaschine nach Anspruch 1, dadurch gekennzeichnet, daß in dem Mehr-Kammer-Motorteil mehrere, winkelversetzt auf einer gemeinsamen Welle (130) rotierende Kolbenläufer (112-117) angeordnet sind, (Fig. 6-8).

7. Rotationskolbenmaschine nach Anspruch 1, dadurch gekennzeichnet, daß die von dem Mehr-Kammer-Motorteil erzeugten Verbrennungsgase über den Überströmkanal (143) in den Arbeitsraum (128, 129) eines Auspuffteils (118, 128 ; 119, 129) eingeleitet werden, und daß im Arbeitsraum (128, 129) jeweils ein gleicher Kolbenläufer (118, 119) wie im Kompressorteil und im Mehr-Kammer-Motorteil angeordnet ist, der jeweils drehfest auf der gemeinsamen Welle (130) angeordnet ist, dem jeweils ein Absperrläcifer zugeordnet ist.

8. Rotationskolbenmaschine nach Anspruch 7, dadurch gekennzeichnet, daß in jeden Arbeitsraum (128, 129) jeder Auspuffstufe die Verbrennungsgase mehrerer Arbeitsräume (127) des Mehr-Kammer-Motorteils eingeleitet werden.

**Claims**

1. Rotary piston machine consisting of a combustion engine, a compressor part and an exhaust gas stage part in which the combustion engine consists of several circular piston rotors (10-15 ; 112-119) mounted in series on a shaft (8, 130), of which each has at least one piston (16-21) (106-111) each of which runs along the corresponding static wall of a cylindrical generating space (23-28 ; 127, 127', 128, 129) and which is in meshing engagement with at least one shut-off rotor (32-37 ; 121-126 ; 154, 155) which rolls on the piston rotor (10-15 ; 112-119), in which the shafts (8, 9 ; 130, 131) of the piston rotor and the shut-off rotors are connected together by meshing gear wheels, and where the gaseous medium is introduced into and expelled from each respective generating space by one or more valve devices which rotate with the shaft (8), characterized as : that the combustion engine, the compressor and exhaust gas stage part are on a common shaft and each piston rotor has only one piston, that the combustion engine is formed as a multichamber engine in which the parallel connected generating spaces form the combustion chamber, that both the compressor part and the exhaust gas stage part each consist of a multi-stage unit in which, in each case, the generating spaces are connected in series, that the generating spaces are separated by valve devices, that each valve device for the induction and/or expelling of the working medium in each generating space (23-28 ; 127, 127', 128, 129) consists in each case of a control disc (40-51 ; 140, 142, 144, 146, 150, 151, 152) secured against rotation to the face of each rotary piston (10-15 ; 112-119), each control disc having, distributed about its circumference, openings (66, 73 ; 82-89 ; 153 ; 166-173) which can be brought to overlap the corresponding openings (53, 80, 81, 178) of transfer ports (54-58 ; 135-139, 141, 143, 145) which are arranged in the partition walls (59-65 ; 158-164) of the machine housing (1, 120) which divide the generating spaces (23-28 ; 127, 127', 128, 129), and that in the compressor part the openings in the control discs are arranged opposite to the openings of the transfer ports so that during one work stroke the connection from a larger generating space to a smaller generating space connected to it is always open over a rotation of about 300 degrees, and that the last stage (7) of the compressor part introduces the highly-compressed working medium into the generating space (127) of the multi-chamber motor through a connection port (134) in the housing and the valve device on the motor side.

2. Rotary piston machine according to Claim 1, characterized as : that in the multi-stage piston compressor part, the control discs (40-51) arranged on the inlet and outlet side limit the generating spaces (23-28) of the compressor part, whose volume reduces from stage to stage.

3. Rotary piston machine according to Claim 2, characterized as : that the volume ratio of the successive stages of the generating spaces (23-26) of the compressor part is 2 : 1.

4. Rotary piston machine according to Claim 1, characterized as : that on the compression side of the piston rotors (10-15 ; 112-119) a radial recess, indented in comparison with the outer circumference, is arranged at a slight clearance from the rotational axis of the piston rotors (10-15 ; 112-119) which, in its range, interupts the sealing rolling engagement with the shut-off rotors (32-37 ; 121-126 ; 154, 155) and which is so arranged that, after closing of the opening (53, 80, 81, 178) of the transfer ports (54, 58 ; 135-139 ; 141, 143, 145) by the control discs (40, 42, 44, 46, 48, 50 ; 140, 142, 144, 146, 148, 150) a connection for the working medium exists between the compression and induction side of the piston rotors (10-15 ; 112-119) (Ref. Figs 2-5 ; 7, 8).

5. Rotary piston machine according to Claim 1, characterized as : that the individual generating spaces (23-28) of the compressor part are connected to the consumption device by openings (182) which can be shut off by adjustable non-return valves (183) (Ref. Fig. 2a).

6. Rotary piston machine in accordance with Claim 1, characterized as : that in the multi-chamber motor part, several rotating piston rotors (112-117) are arranged angularly-displaced on a common shaft (130) (Ref. Fig. 6-8).

7. Rotary piston machine according to Claim 1, characterized as : that the combustible gas generated by the multi-chamber motor part is introduced into the generating space (128, 129) of an exhaust part (118, 128 ; 119, 129), and that in the generating space (128, 129) in each case a similar piston rotor (118, 119) to those on the compressor part and the multi-chamber motor part is arranged each of which is arranged secured to a common shaft (130) and which in each case corresponds with a shut-off rotor.

8. Rotary piston machine according to Claim 7, characterized as : that the combustible gas of several generating spaces (127) of the multi-chamber motor party is introduced into each generating space (128, 129) of each exhaust stage.

**Revendications**

1. Machine à pistons rotatifs, constituée par un moteur à combustion, une partie compresseur et une partie étagée pour gaz sortant, le moteur à combustion étant constitué de plusieurs rotors porte-pistons (10-15 ; 112-119), circulaires, qui se succèdent axialement, sont fixés sur un arbre (8, 130) et présentent chacun au moins un piston (16-21 ; 106-111), lequel est déplacé le long d'une paroi conjuguée, fixe, d'un espace de travail en forme de cylindre à section circulaire (23-28 ; 127, 127', 128, 129) et se conjugue, en y rentrant, à un évidement (74, 174) d'au moins un rotor obturateur (32-37 ; 121-126 ; 154, 155) en rotation de roulement sur le rotor porte-piston (10-15 ; 112-119), les arbres (8 ; 9 ; 130, 131) du rotor porte-piston et du rotor obturateur étant mutuellement couplés par des roues d'accouplement dentées, et le fluide gazeux étant admis dans l'espace de travail concerné, et évacué hors de celui-ci, par un ou plusieurs dispositifs de vanne rotative tournant avec l'arbre (8), caractérisé en ce que le moteur à combustion, le compresseur et la partie étagée pour gaz sortant sont montés sur un arbre commun et chaque rotor porte-piston ne présente qu'un seul piston, en ce que le moteur à combustion est réalisé sous la forme d'un moteur à plusieurs chambres, dans lequel les espaces de travail branchés en parallèle constituent la chambre de combustion, en ce que le compresseur et la partie étagée pour gaz sortant consistent chacun en une unité polyétagée dans laquelle les espaces de travail sont branchés en cascade, en ce que les espaces de travail sont séparés les uns des autres par des dispositifs de vanne, en ce que chaque dispositif de vanne pour l'admission ou l'évacuation du fluide de travail dans l'espace de travail concerné (23-28 ; 127, 127', 128, 129) est constitué par un plateau de distribution (40-51 ; 140, 142, 144, 146, 150, 151, 152) situé frontalement et lié, avec solidarisation en rotation, dans chaque cas, à un rotor porte-piston (10-15 ; 112-119), ce plateau de distribution présentant des ouvertures (66, 73 ; 82-89 ; 153 ; 166-173) qui sont réparties circonférentiellement et qui peuvent être mises en position de recoupement avec des ouvertures conjuguées (53, 80, 81, 178) appartenant à des canaux de transfert (54-58 ; 135-139, 141, 143, 145) agencés dans des cloisons (59-65 ; 158-164) du carter (1, 120) de la machine qu'elles partagent en formant lesdits espaces de travail (23-28 ; 127, 127', 128, 129), en ce que, dans la partie compresseur, les ouvertures dans les plateaux de distribution sont agencées en face des canaux de transfert de manière qu'au cours d'une course de travail la communication entre un plus grand espace de travail et un plus petit espace de travail qui s'y raccorde soit constamment ouverte pendant une rotation de l'ordre de 300°, et en ce que le dernier étage (7) de la partie compresseur envoie aux espaces de travail (127) du moteur à plusieurs chambres le fluide de travail fortement comprimé, cela *via* un canal de communication (134) solidaire du carter et *via* le dispositif de vanne situé côté moteur.

2. Machine à pistons rotatifs selon revendication 1, caractérisée en ce que, dans la partie compresseur polyétagée, les plateaux de distribution (40-51) agencés côté admission et côté sortie délimitent des espaces de travail (23-28) de la partie compresseur, lesquels ont des volumes qui décroissent d'un étage à l'autre.

3. Machine à pistons rotatifs selon revendication 2, caractérisée en ce que le rapport des volumes d'espaces de travail (23-26) de la partie compresseur, lesquels se succèdent par étages, est de 2 : 1.

4. Machine à pistons rotatifs selon revendication 1, caractérisée en ce que, du côté compression du rotor porte-piston (10-15 ; 112-119), est agencé un évidement (75, 175) radialement en retrait par rapport à la périphérie, situé à faible distance de l'axe de rotation du rotor porte-piston (10-15 ; 112-119), cet évidement interrompant, dans sa région, la condition d'engagement de roulement étanche avec le rotor obturateur (32-37 ; 121-126 ; 154, 155) et étant agencé de manière qu'après l'obturation de l'ouverture (53, 80, 81, 178) du canal de transfert (54, 58 ; 135-139 ; 141, 143, 145) par le plateau de distribution (40, 42, 44, 46, 48, 50 ; 140, 142, 144, 146, 148, 150), il y ait, pour le fluide travail, une communication entre le côté compression et le côté aspiration du rotor porte-piston (10-15 ; 112-119) (figures 2-5, 7, 8).

5. Machine à pistons rotatifs selon revendication 1, caractérisée en ce que les volumes de travail individuels (23-28) du compresseur à pistons communiquent avec les organes utilisateurs par des ouvertures (182) obturables par des soupapes de non-retour réglables (183) (figure 2a).

6. Machine à pistons rotatifs selon revendication 1, caractérisée en ce que plusieurs rotors porte-piston (112-117), tournant sur un arbre commun (130) sur lequel ils sont décalés angulairement, sont agencés dans la partie moteur à plusieurs chambres, (figures 6-8).

7. Machine à pistons rotatifs selon revendication 1, caractérisée en ce que les gaz de combustion produits par la partie moteur à plusieurs chambres sont introduits, par le canal de transfert (143), dans l'espace de travail (128, 129) d'une partie échappement (118, 128 ; 119, 129), et en ce que, dans cet espace de travail (128, 129) est agencé un rotor porte-piston (118, 119) identique à ceux dans la partie compresseur et dans la partie moteur à plusieurs chambres, lequel rotor porte-piston est agencé, avec solidarisation en rotation, sur l'arbre commun (130) et est conjugué à un rotor obturateur.

8. Machine à pistons rotatifs selon revendication 7, caractérisée en ce que les gaz de combustion de plusieurs espaces de travail (127) de la partie moteur à plusieurs chambres sont introduits dans chaque espace de travail (128, 129) de chaque étage d'échappement.

FIG 1

FIG 2

FIG 2A

FIG 3

FIG 4

FIG 5

FIG 5A

Steuerdiagramm:
1. Verdichtungsstufe 2

40

10

41

UT

ESO    ESG

ASO    ASG

90

FIG 5B

Steuerdiagramm:
2. Verdichtungsstufe 3

42

43

11

UT

ESO    ESG

ASO    ASG

FIG 5C

1-2 bar

←64 cm² x 2 bar = 128

←64 cm²

2-4 bar

←32 cm²x 4bar = 128

←16 cm² x 8 bar = 128

←32 cm²

←16cm²  4-8 bar

←8 cm²  <8 bar

64cm²

←8 cm²

←16cm²

←8cm²

16cm²

8cm²

8 cm² x 8 bar = 64 →

32 cm²

25

28

26

19

24

17

16 cm² x 4 = 64 →

8 cm² x 8 bar = 64 →

23

16

32 cm² x 2 bar = 64 →

8

8

FIG 6    0 116 356

FIG 7

FIG 8